# EUROPEAN PATENT APPLICATION

(11) **EP 4 489 031 A1**
(43) Date of publication of application: **08.01.2025**
(21) Application number: 23759761.2
(22) Date of filing: 13.02.2023
(51) Int. Cl.: H01B 1/06, C01G 33/00, H01M 4/13, H01M 4/62, H01M 10/052, H01M 10/0562

(54) **SOLID ELECTROLYTE MATERIAL**

(30) Priority: 28.02.2022 JP 2022030164
(71) Applicant: Panasonic Intellectual Property Management Co., Ltd., Kadoma-shi, Osaka 571-0057 (JP)
(72) Inventor: TSUJITA, Takuji, Osaka 571-0057 (JP); NAKAMA, Yoshimasa, Osaka 571-0057 (JP)
(74) Representative: Eisenführ Speiser
(86) International application number: PCT/JP2023/004854
(87) International publication number: WO 2023/162758

(57) **Abstract**

A solid electrolyte material according to the present disclosure includes Li, Nb, Ti, M, and F. The M is at least one selected from the group consisting of Be, Mg, Ca, Sr, Ba, Sc, Y, Al, Ga, In, Zr, and Sn. A battery 1000 according to the present disclosure includes a positive electrode 201, a negative electrode 203, and an electrolyte layer 202 positioned between the positive electrode 201 and the negative electrode 203. At least one selected from the group consisting of the positive electrode 201, the negative electrode 203, and the electrolyte layer 202 includes the solid electrolyte material according to the present disclosure.

## Description

### TECHNICAL FIELD

The present disclosure relates to a solid electrolyte material.

### BACKGROUND ART

Patent Literature 1 discloses a battery in which a solid electrolyte includes In as a cation and a halogen element, such as Cl, Br, or I, as an anion.

### CITATION LIST

### Patent Literature

Patent Literature 1: JP 2006-244734 A

### SUMMARY OF INVENTION

### Technical Problem

The present disclosure aims to provide a novel halide solid electrolyte material.

### Solution to Problem

A solid electrolyte material according to one aspect of the present disclosure includes Li, Nb, Ti, M, and F, wherein
the M is at least one selected from the group consisting of Be, Mg, Ca, Sr, Ba, Sc, Y, Al, Ga, In, Zr, and Sn.

### Advantageous Effects of Invention

According to the present disclosure, it is possible to provide a novel halide solid electrolyte material.

### BRIEF DESCRIPTION OF DRAWINGS

FIG. 1 is a cross-sectional view of a battery 1000 according to Embodiment 2.
FIG. 2 is a schematic diagram of a pressure-molding die for use in evaluating the ionic conductivity of solid electrolyte materials.
FIG. 3 is a graph showing a Cole-Cole plot obtained by impedance measurement on a solid electrolyte material of Example 1.

### DESCRIPTION OF EMBODIMENTS

### (Findings underlying the present disclosure)

Patent Literature 1 discloses an all-solid-state lithium secondary battery in which a solid electrolyte consists of a compound including In as a cation and a halogen element, such as Cl, Br, or I, as an anion. This battery is described as exhibiting favorable charge and discharge characteristics owing to its positive electrode active material having an average potential of 3.9 V or less versus Li. The above disclosure provides a description that setting the potential of the positive electrode active material versus Li to the above value can suppress the formation of a coating formed of an oxidative decomposition product, thereby enabling the battery to exhibit favorable charge and discharge characteristics. Patent Literature 1 also discloses, as positive electrode active materials having an average potential of 3.9 V or less versus Li, typical layered transition metal oxides, such as LiCoO₂ and LiNi_{0.8}Co_{0.15}Al_{0.05}O₂.

Meanwhile, the present inventors have made extensive studies on the resistance of halide solid electrolytes to oxidative decomposition. As a result, the present inventors have found that solid electrolytes exhibit various levels of resistance to oxidative decomposition depending on the types of elements included as anions. Here, halide solid electrolytes are solid electrolytes including a halogen element, such as F, Cl, Br, or I, as an anion.

Specifically, the present inventors have found that using, in a positive electrode material, a halide solid electrolyte including one selected from the group consisting of Cl, Br, and I causes oxidative decomposition of the halide solid electrolyte during charge even with the use of a positive electrode active material having an average potential of 3.9 V or less versus Li. The present inventors have also found that oxidative decomposition of such a halide solid electrolyte as above forms an oxidative decomposition product serving as a resistance layer, thus increasing the internal resistance of the battery during charge. This problem of increasing the internal resistance of the battery during charge is inferred to be due to the oxidation reaction of one element, which is selected from the group consisting of Cl, Br, and I, included in the halide solid electrolyte. The oxidation reaction used herein refers to a side reaction that occurs in addition to a normal charge reaction in which lithium ions and electrons are extracted from the positive electrode active material included in the positive electrode material. In the side reaction, electrons are extracted also from the halide solid electrolyte including the one element, which is selected from the group consisting of Cl, Br, and I, in contact with the positive electrode active material. The halogen element has a relatively large ionic radius, and has a small interaction force with a cationic component of the halide solid electrolyte. Probably because of this fact, the halide solid electrolyte is prone to an oxidation reaction. This oxidation reaction forms, between the positive electrode active material and the halide solid electrolyte, an oxidative decomposition layer having a poor lithium-ion conductivity. This oxidative decomposition layer serves as a high interfacial resistance in the electrode reaction of the positive electrode. This probably increases the internal resistance of the battery during charge.

The present inventors have also revealed that a battery in which a halide solid electrolyte including fluorine (F) is used in a positive electrode material exhibits an excellent oxidation resistance and accordingly can suppress an increase in the internal resistance of the battery during charge. Although the details of the mechanism have not been elucidated, the mechanism is inferred as follows. F has the highest electronegativity among the halogen elements. In a halide solid electrolyte including F, F forms a strong bond with the cation. This makes the halide solid electrolyte to be less prone to the progress with the oxidation reaction of F, namely, the side reaction in which electrons are extracted from F.

On the basis of the above findings, the present inventors have arrived at the solid electrolyte material of the present disclosure.

### (Outline of one aspect according to the present disclosure)

A solid electrolyte material according to a first aspect of the present disclosure includes Li, Nb, Ti, M, and F, wherein
the M is at least one selected from the group consisting of Be, Mg, Ca, Sr, Ba, Sc, Y, Al, Ga, In, Zr, and Sn.

The solid electrolyte material according to the first aspect can have a high oxidation resistance by including F, which has a high oxidation-reduction potential. Meanwhile, solid electrolyte materials including Li and F generally tend to have a low ionic conductivity. The solid electrolyte material according to the first aspect, however, can have a high ionic conductivity by including Nb, Ti, and M in addition to Li and F. With the above configuration, it is therefore possible to provide a novel halide solid electrolyte material having a high oxidation resistance and a high ionic conductivity.

In a second aspect of the present disclosure, for example, the solid electrolyte material according to the first aspect may be such that the solid electrolyte material is represented by the following composition formula (2):

Li_{6-(5-x1-2y1)b1}(Nb_{1-x1-y1}Tiₓ₁M_{y1})_{b1}F₆ Formula (2)

where 0 < x1 < 1, 0 < y1 < 1, 0 < x1 + y1 < 1, and 0 < b1 ≤ 2 are satisfied.

With the above configuration, it is possible to further enhance the ionic conductivity.

In a third aspect of the present disclosure, for example, the solid electrolyte material according to the second aspect may be such that in the composition formula (2), 0.75 ≤ b1 ≤ 1.1 is satisfied.

With the above configuration, it is possible to further enhance the ionic conductivity.

In a fourth aspect of the present disclosure, for example, the solid electrolyte material according to the third aspect may be such that in the composition formula (2), 0.923 ≤ b1 ≤ 1.004 is satisfied.

With the above configuration, it is possible to further enhance the ionic conductivity.

In a fifth aspect of the present disclosure, for example, the solid electrolyte material according to any one of the second to fourth aspects may be such that in the composition formula (2), 0.45 ≤ y1 ≤ 0.85 is satisfied.

With the above configuration, it is possible to further enhance the ionic conductivity.

In a sixth aspect of the present disclosure, for example, the solid electrolyte material according to the fifth aspect may be such that in the composition formula (2), 0.666 ≤ y1 ≤ 0.8 is satisfied.

With the above configuration, it is possible to further enhance the ionic conductivity.

In a seventh aspect of the present disclosure, for example, the solid electrolyte material according to any one of the second to sixth aspects may be such that in the composition formula (2), 0.05 ≤ x1 ≤ 0.3 is satisfied.

With the above configuration, it is possible to further enhance the ionic conductivity.

In an eighth aspect of the present disclosure, for example, the solid electrolyte material according to the seventh aspect may be such that in the composition formula (2), 0.1 ≤ x1 ≤ 0.167 is satisfied.

With the above configuration, it is possible to further enhance the ionic conductivity.

In a ninth aspect of the present disclosure, for example, the solid electrolyte material according to any one of the first to eighth aspects may be such that the M is Al.

With the above configuration, it is possible to further enhance the ionic conductivity.

In a tenth aspect of the present disclosure, for example, the solid electrolyte material according to the first aspect may be such that the solid electrolyte material is represented by the following composition formula (3):

Li_{6-(5-x2-3y2)b2}(Nb_{1-x2-y2}Tiₓ₂M_{y2})_{b2}F₆ Formula (3)

where 0 < x2 < 1, 0 < y2 < 1, 0 < x2 + y2 < 1, and 0 < b2 ≤ 2 are satisfied.

With the above configuration, it is possible to further enhance the ionic conductivity.

In an eleventh aspect of the present disclosure, for example, the solid electrolyte material according to the first aspect may be such that the solid electrolyte material is represented by the following composition formula (4):

Li_{6-(5-x3-y3)b3}(Nb_{1-x3-y3}Tiₓ₃M_{y3})_{b3}F₆ Formula (4)

where 0 < x3 < 1, 0 < y3 < 1, 0 < x3 + y3 < 1, and 0 < b3 ≤ 2 are satisfied.

With the above configuration, it is possible to further enhance the ionic conductivity.

A battery according to a twelfth aspect of the present disclosure includes: a positive electrode; a negative electrode; and an electrolyte layer positioned between the positive electrode and the negative electrode, wherein at least one selected from the group consisting of the positive electrode, the negative electrode, and the electrolyte layer includes the solid electrolyte material according to any one of the first to eleventh aspects.

The battery according to the twelfth aspect can suppress an increase in the internal resistance during charge.

Embodiments of the present disclosure are described below with reference to the drawings.

### (Embodiment 1)

A solid electrolyte material according to Embodiment 1 includes Li, Nb, Ti, M, and F. M is at least one selected from the group consisting of Be, Mg, Ca, Sr, Ba, Sc, Y, Al, Ga, In, Zr, and Sn.

The solid electrolyte material according to Embodiment 1 can have a high oxidation resistance by including F, which has a high oxidation-reduction potential. Meanwhile, F has a high electronegativity, and accordingly has a relatively strong bond with Li. Consequently, solid electrolyte materials including Li and F generally tend to have a low ionic conductivity. For example, LiBF₄ has an ionic conductivity of about 6.7 × 10⁻⁹ S/cm. The solid electrolyte material according to Embodiment 1, however, can have a high ionic conductivity of, for example, 3 × 10⁻⁶ S/cm or more and even 7 × 10⁻⁶ S/cm or more, by including Nb, Ti, and M in addition to Li and F. With the above configuration, it is therefore possible to provide a novel halide solid electrolyte material having a high oxidation resistance and a high ionic conductivity.

The solid electrolyte material may further include an anion other than F. Examples of the anion include Cl, Br, I, O, S, and Se. With the above configuration, it is possible to further enhance the ionic conductivity.

The solid electrolyte material may consist substantially of Li, Nb, Ti, M, and F. Here, the phrase "the solid electrolyte material consists substantially of Li, Nb, Ti, M, and F" means that the ratio (i.e., mole fraction) of the sum of the amounts of substance of Li, Nb, Ti, M, and F to the total of the amounts of substance of all the elements constituting the solid electrolyte material according to Embodiment 1 is 90% or more. In an example, the ratio (i.e., mole fraction) may be 95% or more.

The solid electrolyte material may consist of Li, Nb, Ti, M, and F.

The solid electrolyte material may include an element unavoidably incorporated. Examples of the element include hydrogen, oxygen, and nitrogen. Such an element can be included in the raw material powders of the solid electrolyte material or present in an atmosphere for manufacturing or storing the solid electrolyte material.

In the solid electrolyte material, the ratio of the amount of substance of Li to the sum of the amounts of substance of Nb, Ti, and M may be 2.1 or more and 3.2 or less, may be 2.31 or more and 3.04 or less, and may be 2.48 or more and 3.04 or less. With the above configuration, it is possible to further enhance the ionic conductivity.

The ratio of the amount of substance F to the sum of the amounts of substance of Li, Nb, Ti, M, and F may be 0.4 or more and 0.8 or less, and may be 0.5 or more and 0.7 or less.

The solid electrolyte material may be represented by the following composition formula (1):

Li_{α}Nb_{β}Ti_{γ}M_{δ}F_{ε} Formula (1)

where α, β, γ, and δ are each a value greater than 0.

In the composition formula (1), ε may be a value greater than α, and ε may be a value greater than each of α, β, γ, and δ.

In the composition formula (1), 1.7 ≤ α ≤ 3.7, 0 < β ≤ 0.7, 0 < γ ≤ 0.7, 0 < δ ≤ 2, and 5 ≤ ε ≤ 7 may be satisfied.

In the composition formula (1), 2.4 ≤ α ≤ 3, 0.05 ≤ β ≤ 0.3, 0.05 ≤ γ ≤ 0.3, 0.3 ≤ δ ≤ 1, and ε = 6 may be satisfied.

In the solid electrolyte material, M may be one selected from the group consisting of Be, Mg, Ca, Sr, Ba, Sc, Y, Al, Ga, In, Zr, and Sn. With the above configuration, it is possible to further enhance the ionic conductivity.

M may include Al. M may be Al.

The solid electrolyte material may be represented by the following composition formula (2):

Li_{6-(5-x1-2y1)b1}(Nb_{1-x1-y1}Tiₓ₁M_{y1})_{b1}F₆ Formula (2)

where 0 < x1 < 1, 0 < y1 <1, 0 < x1 + y1 < 1, and 0 < b1 ≤ 2 may be satisfied.

In the composition formula (2), M may include Al. M may be Al.

In the composition formula (2), 0 < b1 ≤ 1.5 may be satisfied, 0.75 ≤ b1 ≤ 1.1 may be satisfied, 0.889 ≤ b1 ≤ 1.034 may be satisfied, and 0.923 ≤ b1 ≤ 1.004 may be satisfied. With the above configuration, it is possible to further enhance the ionic conductivity.

In the composition formula (2), 0.45 ≤ y1 ≤ 0.85 may be satisfied, 0.5 ≤ y1 ≤ 0.8 may be satisfied, 0.666 ≤ y1 ≤0.8 may be satisfied, and 0.666 ≤ y1 ≤ 0.75 may be satisfied.

In the composition formula (2), 0.05 ≤ x1 ≤ 0.3 may be satisfied, 0.1 ≤ x1 ≤ 0.25 may be satisfied, 0.1 ≤ x1 ≤ 0.167 may be satisfied, and 0.125 ≤ x1 ≤ 0.167 may be satisfied. With the above configuration, it is possible to further enhance the ionic conductivity.

The solid electrolyte material may be represented by the following composition formula (3):

Li_{6-(5-x2-3y2)b2}(Nb_{1-x2-y2}Tiₓ₂M_{y2})_{b2}F₆ Formula (3)

where 0 < x2 < 1, 0 < y2 < 1, 0 < x2 + y2 < 1, and 0 < b2 ≤ 2 may be satisfied.

The solid electrolyte material may be represented by the following composition formula (4):

Li_{6-(5-x3-y3)b3}(Nb_{1-x3-y3}Tiₓ₃M_{y3})_{b3}F₆ Formula (4)

where 0 < x3 < 1, 0 < y3 < 1, 0 < x3 + y3 < 1, and 0 < b3 ≤ 2 may be satisfied.

The solid electrolyte material may be free of sulfur. The above configuration can prevent the generation of hydrogen sulfide gas. Therefore, it is possible to achieve a battery having an enhanced safety.

The solid electrolyte material may be crystalline or may be amorphous.

The solid electrolyte material may have any shape. Examples of the shape of the solid electrolyte material include an acicular shape, a spherical shape, and an ellipsoidal shape. The solid electrolyte material may be particulate. The solid electrolyte material may be formed in the shape of a pellet or a plate.

In the case where the solid electrolyte material is, for example, particulate (e.g., spherical), the solid electrolyte material may have a median diameter of 0.1 µm or more and 100 µm or less.

In the present disclosure, the median diameter means the particle diameter at a cumulative volume equal to 50% in the volumetric particle size distribution. The volumetric particle size distribution is measured with, for example, a laser diffractometer or an image analyzer.

The solid electrolyte material may have a median diameter of 0.5 µm or more and 10 µm or less. With the above configuration, it is possible to further enhance the ionic conductivity. Furthermore, in mixing the solid electrolyte material with a different material such as an active material, a favorable dispersion state of the solid electrolyte material and the different material is achieved.

### <Method for manufacturing solid electrolyte material>

The solid electrolyte material according to Embodiment 1 can be manufactured by, for example, the following method.

Raw material powders are prepared and mixed to obtain a target composition. The raw material powders may be, for example, halides.

In an example where the target composition is Li_{2.61}Nb_{0.16}Ti_{0.16}Al_{0.64}F_{6.0}, LiF, NbFs, TiF₄, and AlF₃ are mixed in an approximate molar ratio of 2.61:0.16:0.16:0.64. The raw material powders may be mixed in a molar ratio adjusted in advance so as to cancel out a composition change that can occur in the synthesis process.

The raw material powders are reacted with each other mechanochemically (i.e., by mechanochemical milling) in a mixer such as a planetary ball mill to obtain a reaction product. The reaction product may be fired in a vacuum or in an inert atmosphere. Alternatively, the mixture of the raw material powders may be fired in a vacuum or in an inert atmosphere to obtain a reaction product. The firing may be conducted, for example, at 100°C or higher and 300°C or lower for 1 hour or longer. To suppress a composition change during the firing, the raw material powders may be fired in a hermetically sealed container such as a quartz tube. The firing may be, for example, an annealing process conducted in an electric furnace set at 125°C for 6 hours following a milling process.

The solid electrolyte material according to Embodiment 1 is thus obtained.

### (Embodiment 2)

Embodiment 2 is described below. The matters described in Embodiment 1 can be omitted as appropriate.

A battery according to Embodiment 2 includes a positive electrode, a negative electrode, and an electrolyte layer. The electrolyte layer is disposed between the positive electrode and the negative electrode. At least one selected from the group consisting of the positive electrode, the electrolyte layer, and the negative electrode includes the solid electrolyte material according to Embodiment 1.

The battery according to Embodiment 2 includes the solid electrolyte material according to Embodiment 1, and accordingly has excellent charge and discharge characteristics.

The battery according to Embodiment 2 may be an all-solid-state battery.

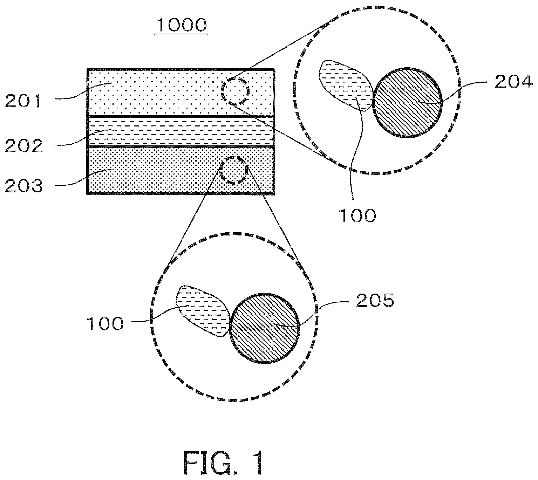

FIG. 1 is a cross-sectional view of a battery 1000 according to Embodiment 2.

The battery 1000 includes a positive electrode 201, an electrolyte layer 202, and a negative electrode 203. The electrolyte layer 202 is disposed between the positive electrode 201 and the negative electrode 203.

The positive electrode 201 includes a positive electrode active material 204 and a solid electrolyte 100.

The negative electrode 203 includes a negative electrode active material 205 and the solid electrolyte 100.

The solid electrolyte 100 includes, for example, the solid electrolyte material according to Embodiment 1. The solid electrolyte 100 is, for example, in the form of particles including the solid electrolyte material according to Embodiment 1 as the main component. The particles including the solid electrolyte material according to Embodiment 1 as the main component mean particles in which the component contained in the largest amount in molar ratio is the solid electrolyte material according to Embodiment 1. The solid electrolyte 100 may be in the form of particles consisting of the solid electrolyte material according to Embodiment 1.

The positive electrode 201 includes a material capable of occluding and releasing metal ions (e.g., lithium ions). The material is, for example, the positive electrode active material 204.

Examples of the positive electrode active material 204 include a lithium-containing transition metal oxide, a transition metal fluoride, a polyanion material, a fluorinated polyanion material, a transition metal sulfide, a transition metal oxyfluoride, a transition metal oxysulfide, and a transition metal oxynitride. Examples of the lithium-containing transition metal oxide include Li(Ni,Co,Al)O₂, LiCoO₂, and Li(Ni,Co,Mn)O₂.

In the present disclosure, "(A,B,C)" means "at least one selected from the group consisting of A, B, and C", where A, B, and C each represent an element.

The positive electrode active material 204 is not limited to any particular shape. The positive electrode active material 204 may be particulate. To favorably disperse the positive electrode active material 204 and the solid electrolyte 100 in the positive electrode 201, the positive electrode active material 204 may have a median diameter of 0.1 µm or more. The favorable dispersion enhances the charge and discharge characteristics of the battery 1000. To rapidly diffuse lithium in the positive electrode active material 204, the positive electrode active material 204 may have a median diameter of 100 µm or less. The rapid lithium diffusion enables the battery 1000 to operate at a high output. As described above, the positive electrode active material 204 may have a median diameter of 0.1 µm or more and 100 µm or less.

To favorably disperse the positive electrode active material 204 and the solid electrolyte 100 in the positive electrode 201, the positive electrode active material 204 may have a larger median diameter than the solid electrolyte 100.

To enhance the energy density and output of the battery 1000, the ratio of the volume of the positive electrode active material 204 to the sum of the volume of the positive electrode active material 204 and the volume of the solid electrolyte 100 in the positive electrode 201 may be 0.30 or more and 0.95 or less.

To enhance the energy density and output of the battery 1000, the positive electrode 201 may have a thickness of 10 µm or more and 500 µm or less.

The electrolyte layer 202 includes an electrolyte material. The electrolyte material is, for example, a solid electrolyte material. The electrolyte layer 202 may be a solid electrolyte layer.

The solid electrolyte material included in the electrolyte layer 202 may include the solid electrolyte material according to Embodiment 1. The electrolyte layer 202 may include the solid electrolyte material according to Embodiment 1. The solid electrolyte material according to Embodiment 1 may account for 50 mass% or more of the electrolyte layer 202. The solid electrolyte material according to Embodiment 1 may account for 70 mass% or more of the electrolyte layer 202. The solid electrolyte material according to Embodiment 1 may account for 90 mass% or more of the electrolyte layer 202.

The electrolyte layer 202 may consist of the solid electrolyte material according to Embodiment 1.

The solid electrolyte material according to Embodiment 1 is hereinafter referred to as a first solid electrolyte material. A solid electrolyte material different from the first solid electrolyte material is hereinafter referred to as a second solid electrolyte material.

The electrolyte layer 202 may include the first solid electrolyte material, and in addition, include the second solid electrolyte material. In the electrolyte layer 202, the first solid electrolyte material and the second solid electrolyte material may be uniformly dispersed. A layer consisting of the first solid electrolyte material and a layer consisting of the second solid electrolyte material may be stacked along the stacking direction for the battery 1000.

The electrolyte layer 202 may consist of the second solid electrolyte material.

Examples of the second solid electrolyte material include Li₂MgX₄, Li₂FeX₄, Li(Al,Ga,In)X₄, Li₃(Al,Ga,In)X₆, and LiX, where X is at least one selected from the group consisting of F, Cl, Br, and I.

To suppress a short circuit between the positive electrode 201 and the negative electrode 203 and enhance the output of the battery 1000, the electrolyte layer 202 may have a thickness of 1 µm or more and 100 µm or less.

The negative electrode 203 includes a material capable of occluding and releasing metal ions (e.g., lithium ions). The material is, for example, the negative electrode active material 205.

Examples of the negative electrode active material 205 include a metal material, a carbon material, an oxide, a nitride, a tin compound, and a silicon compound. The metal material may be a simple substance of metal or may be an alloy. Examples of the metal material include lithium metal and a lithium alloy. Examples of the carbon material include natural graphite, coke, partially graphitized carbon, a carbon fiber, spherical carbon, artificial graphite, and amorphous carbon. From the viewpoint of capacity density, suitable examples of the negative electrode active material 205 include silicon (i.e., Si), tin (i.e., Sn), a silicon compound, and a tin compound.

The negative electrode active material 205 is not limited to any particular shape. The negative electrode active material 205 may be particulate. To favorably disperse the negative electrode active material 205 and the solid electrolyte 100 in the negative electrode 203, the negative electrode active material 205 may have a median diameter of 0.1 µm or more. The favorable dispersion enhances the charge and discharge characteristics of the battery. To rapidly diffuse lithium in the negative electrode active material 205, the negative electrode active material 205 may have a median diameter of 100 µm or less. The rapid lithium diffusion enables the battery to operate at a high output. As described above, the negative electrode active material 205 may have a median diameter of 0.1 µm or more and 100 µm or less.

To favorably disperse the negative electrode active material 205 and the solid electrolyte 100 in the negative electrode 203, the negative electrode active material 205 may have a larger median diameter than the solid electrolyte 100.

To enhance the energy density and output of the battery 1000, the ratio of the volume of the negative electrode active material 205 to the sum of the volume of the negative electrode active material 205 and the volume of the solid electrolyte 100 in the negative electrode 203 may be 0.30 or more and 0.95 or less.

To enhance the energy density and output of the battery 1000, the negative electrode 203 may have a thickness of 10 µm or more and 500 µm or less.

To enhance the ionic conductivity, chemical stability, and electrochemical stability, at least one selected from the group consisting of the positive electrode 201, the electrolyte layer 202, and the negative electrode 203 may include the second solid electrolyte material. Examples of the second solid electrolyte material include a halide solid electrolyte, a sulfide solid electrolyte, an oxide solid electrolyte, and an organic polymer solid electrolyte.

In the present disclosure, the "halide solid electrolyte" refers to a solid electrolyte containing a halogen element as the main component among the contained anions. The "sulfide solid electrolyte" refers to a solid electrolyte containing sulfur as the main component among the contained anions. The "oxide solid electrolyte" refers to a solid electrolyte containing oxygen as the main component among the contained anions. The main component among the contained anions refers to an anion having the highest amount of substance among all the anions constituting the solid electrolyte.

The second solid electrolyte material may be a halide solid electrolyte. The halide solid electrolyte may be Li₂MgX₄, Li₂FeX₄, Li(Al,Ga,In)X₄, Li₃(Al,Ga,In,Y)X₆, or Lil, as described above.

Another example of the halide solid electrolyte is a compound represented by LiₚMe_{q}YᵣZ₆, where p + m'q + 3r = 6 and r > 0 are satisfied, Me is at least one element selected from the group consisting of metalloid elements and metal elements other than Li or Y, the value of m' represents the valence of Me, and Z is at least one selected from the group consisting of F, Cl, Br, and I. The "metalloid elements" refer to B, Si, Ge, As, Sb, and Te. The "metal elements" refer to all the elements included in Groups 1 to 12 of the periodic table (except hydrogen) and all the elements included in Groups 13 to 16 of the periodic table (except B, Si, Ge, As, Sb, Te, C, N, P, O, S, and Se).

To enhance the ionic conductivity of the halide solid electrolyte, Me may be at least one selected from the group consisting of Mg, Ca, Sr, Ba, Zn, Sc, Al, Ga, Bi, Zr, Hf, Ti, Sn, Ta, and Nb.

The halide solid electrolyte may be Li₃YCl₆ or Li₃YBr₆.

The second solid electrolyte material may be a sulfide solid electrolyte.

Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

The second solid electrolyte material may be an oxide solid electrolyte.

Examples of the oxide solid electrolyte include:
(i) a NASICON solid electrolyte, such as LiTi₂(PO₄)₃ or its element-substituted substance;
(ii) a perovskite solid electrolyte, such as (LaLi)TiOs;
(iii) a LISICON solid electrolyte, such as Li₁₄ZnGe₄O₁₆, Li₄SiO₄, LiGeO₄, or its element-substituted substance;
(iv) a garnet solid electrolyte, such as Li₇La₃Zr₂O₁₂ or its element-substituted substance; and
(v) Li₃PO₄ and its N-substituted substance.

The second solid electrolyte material may be an organic polymer solid electrolyte.

An example of the organic polymer solid electrolyte is a compound of a polymer compound and a lithium salt. The polymer compound may have an ethylene oxide structure. The polymer compound having an ethylene oxide structure can contain a lithium salt in a large amount, and accordingly can have a further enhanced ionic conductivity.

Examples of the lithium salt include LiPF₆, LiBF₄, LiSbF₆, LiAsF₆, LiSOsCFs, LiN(SO₂CF₃)₂, LiN(SO₂C₂F₅)₂, LiN(SO₂CF₃)(SO₂C₄F₉), and LiC(SO₂CF₃)₃. One lithium salt selected from the above may be used alone. Alternatively, a mixture of two or more lithium salts selected from the above may be used.

At least one selected from the group consisting of the positive electrode 201, the electrolyte layer 202, and the negative electrode 203 may include a nonaqueous electrolyte solution, a gel electrolyte, or an ionic liquid for the purpose of facilitating transfer of lithium ions to enhance the output characteristics of the battery 1000.

The nonaqueous electrolyte solution contains a nonaqueous solvent and a lithium salt dissolved in the nonaqueous solvent.

Examples of the nonaqueous solvent include a cyclic carbonate solvent, a chain carbonate solvent, a cyclic ether solvent, a chain ether solvent, a cyclic ester solvent, a chain ester solvent, and a fluorinated solvent. Examples of the cyclic carbonate solvent include ethylene carbonate, propylene carbonate, and butylene carbonate. Examples of the chain carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the chain ether solvent include 1,2-dimethoxyethane and 1,2-diethoxyethane. Examples of the cyclic ester solvent include γ-butyrolactone. Examples of the chain ester solvent include methyl acetate. Examples of the fluorinated solvent include fluoroethylene carbonate, methyl fluoropropionate, fluorobenzene, fluoroethylmethyl carbonate, and fluorodimethylene carbonate.

One nonaqueous solvent selected from the above may be used alone. Alternatively, a mixture of two or more nonaqueous solvents selected from the above may be used.

Examples of the lithium salt include LiPF₆, LiBF₄, LiSbF₆, LiAsF₆, LiSOsCFs, LiN(SO₂CF₃)₂, LiN(SO₂C₂F₅)₂, LiN(SO₂CF₃)(SO₂C₄F₉), and LiC(SO₂CF₃)₃. One lithium salt selected from the above may be used alone. Alternatively, a mixture of two or more lithium salts selected from the above may be used.

The lithium salt has a concentration of, for example, 0.5 mol/L or more and 2 mol/L or less.

The gel electrolyte can be a polymer material impregnated with a nonaqueous electrolyte solution. Examples of the polymer material include polyethylene oxide, polyacrylonitrile, polyvinylidene fluoride, polymethylmethacrylate, and a polymer having an ethylene oxide bond.

Examples of the cation contained in the ionic liquid include:
(i) an aliphatic chain quaternary salt, such as tetraalkylammonium or tetraalkylphosphonium;
(ii) an aliphatic cyclic ammonium, such as pyrrolidinium, morpholinium, imidazolinium, tetrahydropyrimidinium, piperazinium, or piperidinium; and
(iii) a nitrogen-containing heterocyclic aromatic cation, such as pyridinium or imidazolium.

Examples of the anion contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻. The ionic liquid may contain a lithium salt.

At least one selected from the group consisting of the positive electrode 201, the electrolyte layer 202, and the negative electrode 203 may include a binder for the purpose of enhancing the adhesion between the particles.

Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrenebutadiene rubber, and carboxymethylcellulose. The binder can also be a copolymer. Examples of such a binder include a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from the above materials may be used as the binder.

At least one selected from the positive electrode 201 and the negative electrode 203 may include a conductive additive in order to enhance the electronic conductivity.

Examples of the conductive additive include:
(i) graphite, such as natural graphite or artificial graphite;
(ii) carbon black, such as acetylene black or Ketjenblack;
(iii) a conductive fiber, such as a carbon fiber or a metal fiber;
(iv) fluorinated carbon;
(v) a metal powder, such as an aluminum powder;
(vi) a conductive whisker, such as a zinc oxide whisker or a potassium titanate whisker;
(vii) a conductive metal oxide, such as titanium oxide; and
(viii) a conductive polymer compound, such as polyaniline compound, polypyrrole compound, or polythiophene compound. To reduce the cost, the conductive additive in the above (i) or (ii) may be used.

Examples of the shape of the battery according to Embodiment 2 include a coin type, a cylindrical type, a prismatic type, a sheet type, a button type, a flat type, and a stacked type.

The battery according to Embodiment 2 may be manufactured by, for example, preparing a material for forming a positive electrode, a material for forming an electrolyte layer, and a material for forming a negative electrode, and producing by a known method a stack composed of the positive electrode, the electrolyte layer, and the negative electrode disposed in this order.

### Examples

### (Production of solid electrolyte material)

### <<Example 1>>

In a glove box with an argon atmosphere and a dew point of -60°C or lower (hereinafter referred to as "in an argon atmosphere"), LiF, NbFs, TiF₄, and AlF₃ were prepared as the raw material powders in a molar ratio of LiF:NbF₅:TiF₄:AlF₃ = 2.61:0.13:0.13:0.75. The ratio of the amount of substance of Li to the sum of the amounts of substance of Nb, Ti, and M, (Li/(Nb + Ti + M)), was 2.58. These raw material powders were subjected to a milling process in a planetary ball mill (Type P-7 manufactured by Fritsch GmbH) at 500 rpm for 24 hours. Thus, a powder of a solid electrolyte material of Example 1 was obtained. The solid electrolyte material of Example 1 had composition represented by Li_{2.61}Nb_{0.13}Ti_{0.13}Al_{0.75}F_{6.0}. Here, the composition of the solid electrolyte material obtained is expressed in charge ratio because a preliminary experiment demonstrated that the measured value of the composition of the solid electrolyte material was almost equal to its charge ratio.

### «Example 2»

LiF, NbFs, TiF₄, and AlF₃ were prepared as the raw material powders in a molar ratio of LiF:NbF₅:TiF₄:AlF₃ = 2.75:0.14:0.23:0.55. Following a milling process, an annealing process was conducted in an electric furnace set at 125°C for 6 hours. Except for these, a solid electrolyte material of Example 2 was obtained in the same manner as in Example 1.

### «Example 3»

LiF, NbFs, TiF₄, and AlF₃ were prepared as the raw material powders in a molar ratio of LiF:NbF₅:TiF₄:AlF₃ = 2.71:0.23:0.14:0.54. Following a milling process, an annealing process was conducted in an electric furnace set at 125°C for 6 hours. Except for these, a solid electrolyte material of Example 3 was obtained in the same manner as in Example 1.

### «Example 4»

LiF, NbFs, TiF₄, and AlF₃ were prepared as the raw material powders in a molar ratio of LiF:NbF₅:TiF₄:AlF₃ = 2.67:0.22:0.22:0.44. Following a milling process, an annealing process was conducted in an electric furnace set at 125°C for 6 hours. Except for these, a solid electrolyte material of Example 4 was obtained in the same manner as in Example 1.

### «Example 5»

LiF, NbFs, TiF₄, and AlF₃ were prepared as the raw material powders in a molar ratio of LiF:NbF₅:TiF₄:AlF₃ = 2.63:0.15:0.15:0.68. Following a milling process, an annealing process was conducted in an electric furnace set at 125°C for 6 hours. Except for these, a solid electrolyte material of Example 5 was obtained in the same manner as in Example 1.

### «Example 6»

LiF, NbFs, TiF₄, and AlF₃ were prepared as the raw material powders in a molar ratio of LiF:NbF₅:TiF₄:AlF₃ = 2.79:0.14:0.14:0.65. Following a milling process, an annealing process was conducted in an electric furnace set at 125°C for 6 hours. Except for these, a solid electrolyte material of Example 6 was obtained in the same manner as in Example 1.

### «Example 7»

LiF, NbFs, TiF₄, and AlF₃ were prepared as the raw material powders in a molar ratio of LiF:NbF₅:TiF₄:AlF₃ = 2.61:0.16:0.16:0.64. Following a milling process, an annealing process was conducted in an electric furnace set at 125°C for 6 hours. Except for these, a solid electrolyte material of Example 7 was obtained in the same manner as in Example 1.

### «Example 8»

LiF, NbFs, TiF₄, and AlF₃ were prepared as the raw material powders in a molar ratio of LiF:NbF₅:TiF₄:AlF₃ = 2.77:0.15:0.15:0.61. Following a milling process, an annealing process was conducted in an electric furnace set at 125°C for 6 hours. Except for these, a solid electrolyte material of Example 8 was obtained in the same manner as in Example 1.

### «Example 9»

LiF, NbFs, TiF₄, and AlF₃ were prepared as the raw material powders in a molar ratio of LiF:NbF₅:TiF₄:AlF₃ = 2.56:0.16:0.16:0.65. Following a milling process, an annealing process was conducted in an electric furnace set at 125°C for 6 hours. Except for these, a solid electrolyte material of Example 9 was obtained in the same manner as in Example 1.

### «Example 10»

LiF, NbFs, TiF₄, and AlF₃ were prepared as the raw material powders in a molar ratio of LiF:NbF₅:TiF₄:AlF₃ = 2.5:0.17:0.17:0.67. Following a milling process, an annealing process was conducted in an electric furnace set at 125°C for 6 hours. Except for these, a solid electrolyte material of Example 10 was obtained in the same manner as in Example 1.

### <<Example 11>>

LiF, NbFs, TiF₄, and AlF₃ were prepared as the raw material powders in a molar ratio of LiF:NbF₅:TiF₄:AlF₃ = 2.44:0.17:0.17:0.68. Following a milling process, an annealing process was conducted in an electric furnace set at 125°C for 6 hours. Except for these, a solid electrolyte material of Example 11 was obtained in the same manner as in Example 1.

### «Example 12»

LiF, NbFs, TiF₄, and AlF₃ were prepared as the raw material powders in a molar ratio of LiF:NbF₅:TiF₄:AlF₃ = 2.38:0.17:0.17:0.69. Following a milling process, an annealing process was conducted in an electric furnace set at 125°C for 6 hours. Except for these, a solid electrolyte material of Example 12 was obtained in the same manner as in Example 1.

### «Example 13»

LiF, NbFs, TiF₄, and AlF₃ were prepared as the raw material powders in a molar ratio of LiF:NbF₅:TiF₄:AlF₃ = 2.61:0.13:0.13:0.75. Following a milling process, an annealing process was conducted in an electric furnace set at 125°C for 6 hours. Except for these, a solid electrolyte material of Example 13 was obtained in the same manner as in Example 1.

### «Example 14»

LiF, NbFs, TiF₄, and AlF₃ were prepared as the raw material powders in a molar ratio of LiF:NbF₅:TiF₄:AlF₃ = 2.59:0.1:0.1:0.83. Following a milling process, an annealing process was conducted in an electric furnace set at 125°C for 6 hours. Except for these, a solid electrolyte material of Example 14 was obtained in the same manner as in Example 1.

### <<Comparative Example 1>>

LiF and NbFs were prepared as the raw material powders in a molar ratio of LiF:NbFs = 1.0:1.0. Except for this, Li_{1.0}Nb_{1.0}F₆ was obtained as the solid electrolyte material of Comparative Example 1 in the same manner as in Example 1.

### <<Comparative Example 2>>

LiF and NbFs were prepared as the raw material powders in a molar ratio of LiF:NbFs = 3.0:1.0. Except for this, Li_{3.0}Nb_{1.0}F₈ was obtained as the solid electrolyte material of Comparative Example 2 in the same manner as in Example 1.

### (Evaluation of ionic conductivity)

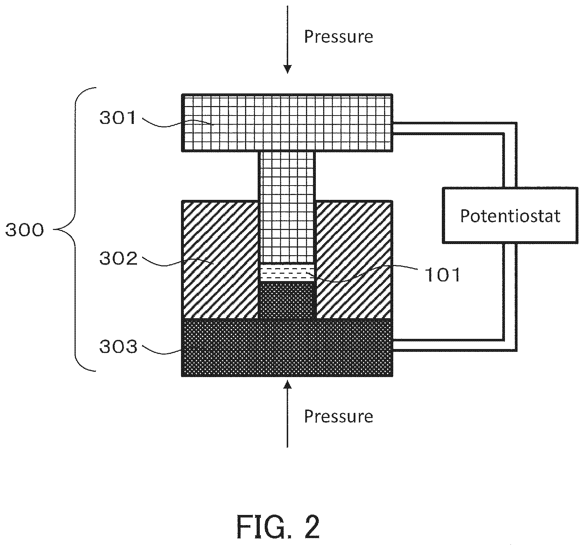

FIG. 2 is a schematic diagram of a pressure-molding die 300 for use in evaluating the ionic conductivity of the solid electrolyte materials.

The pressure-molding die 300 included an upper punch 301, a die 302, and a lower punch 303. The die 302 was made of polycarbonate, which is insulating. The upper punch 301 and the lower punch 303 were made of stainless steel, which is electronically conductive.

The pressure-molding die 300 shown in FIG. 2 was used to evaluate the ionic conductivity of the solid electrolyte materials of Examples 1 to 14 and Comparative Examples 1 to 2 by the following method.

In a dry atmosphere with a dew point of -30°C or lower, the pressure-molding die 300 was filled with a powder 101 of the solid electrolyte material of Example 1. Inside the pressure-molding die 300, a pressure of 400 MPa was applied to the powder 101 of the solid electrolyte material with the upper punch 301 and the lower punch 303.

While the pressure was applied, the upper punch 301 and the lower punch 303 were connected to a potentiostat (VSP-300 manufactured by Bio-Logic SAS) equipped with a frequency response analyzer. The upper punch 301 was connected to the working electrode and the potential measurement terminal. The lower punch 303 was connected to the counter electrode and the reference electrode. The impedance of the solid electrolyte material was measured at room temperature (25°C) by electrochemical impedance measurement.

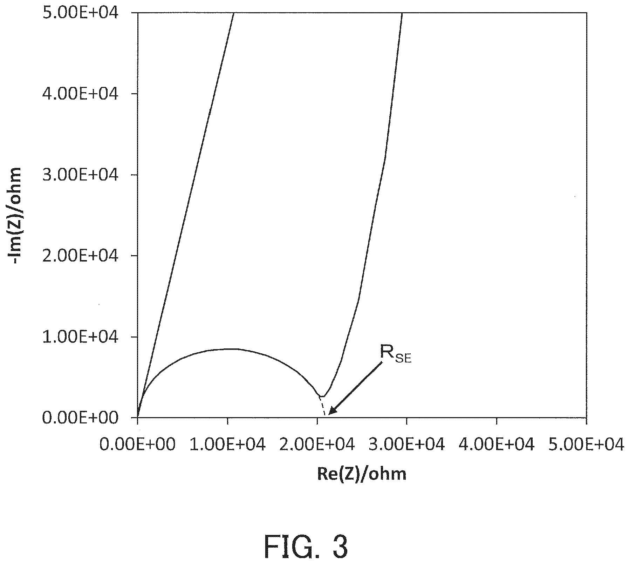

FIG. 3 is a graph showing a Cole-Cole plot obtained by the impedance measurement on the solid electrolyte material of Example 1. In FIG. 3, the vertical axis represents the imaginary part of the impedance, and the horizontal axis represents the real part of the impedance.

In FIG. 3, a real value of the complex impedance at the measurement point where the absolute value of the phase of the complex impedance was smallest was defined as the resistance value of the solid electrolyte material to ion conduction. For the real value, see an arrow R_{SE} shown in FIG. 3. The ionic conductivity was calculated from the resistance value by the following mathematical formula (5):

σ = (R_{SE} × S/t)⁻¹ Formula (5).

In the mathematical formula (5), σ represents the ionic conductivity; S represents the contact area of the solid electrolyte material with the upper punch 301 (equal to the cross-sectional area of the cavity of the die 302 in FIG. 2); R_{SE} represents the resistance value of the solid electrolyte material in the impedance measurement; t represents the thickness of the solid electrolyte material (i.e., the thickness of the layer formed of the powder 101 of the solid electrolyte material in FIG. 2).

The ionic conductivity of the solid electrolyte material of Example 1 calculated by the mathematical formula (5) was 4.21 × 10⁻⁶ S/cm.

The solid electrolyte materials of Examples 2 to 14 and Comparative Examples 1 to 2 were subjected to calculation of ionic conductivity as in Example 1. The results are shown in Table 1 below.

**[Table 1]**

| | Composition formula | x1 | y1 | b1 | Annealing process | Conductivity [S/cm] |
|---|---|---|---|---|---|---|
| Example 1 | Li_{2.61}Nb_{0.13}Ti_{0.13}Al_{0.75}F₆ | 0.125 | 0.750 | 1.004 | Not conducted | 4.21×10⁻⁶ |
| Example 2 | Li_{2.75}Nb_{0.14}Ti_{0.23}Al_{0.55}F₆ | 0.250 | 0.600 | 0.916 | Conducted | 5.20×10⁻⁶ |
| Example 3 | Li_{2.71}Nb_{0.23}Ti_{0.14}Al_{0.54}F₆ | 0.150 | 0.600 | 0.902 | Conducted | 5.95×10⁻⁶ |
| Example 4 | Li_{2.67}Nb_{0.22}Ti_{0.22}Al_{0.44}F₆ | 0.250 | 0.500 | 0.889 | Conducted | 3.95×10⁻⁶ |
| Example 5 | Li_{2.63}Nb_{0.15}Ti_{0.15}Al_{0.68}F₆ | 0.150 | 0.700 | 0.976 | Conducted | 8.29×10⁻⁶ |
| Example 6 | Li_{2.79}Nb_{0.14}Ti_{0.14}Al_{0.65}F₆ | 0.150 | 0.700 | 0.930 | Conducted | 7.87×10⁻⁶ |
| Example 7 | Li_{2.61}Nb_{0.16}Ti_{0.16}Al_{0.64}F₆ | 0.167 | 0.666 | 0.968 | Conducted | 9.26×10⁻⁶ |
| Example 8 | Li_{2.77}Nb_{0.15}Ti_{0.15}Al_{0.61}F₆ | 0.167 | 0.666 | 0.923 | Conducted | 8.73×10⁻⁶ |
| Example 9 | Li_{2.56}Nb_{0.16}Ti_{0.16}Al_{0.65}F₆ | 0.167 | 0.666 | 0.983 | Conducted | 8.08×10⁻⁶ |
| Example 10 | Li_{2.5}Nb_{0.17}Ti_{0.17}Al_{0.67}F₆ | 0.167 | 0.666 | 1.000 | Conducted | 7.65×10⁻⁶ |
| Example 11 | Li_{2.44}Nb_{0.17}Ti_{0.17}Al_{0.68}F₆ | 0.167 | 0.666 | 1.017 | Conducted | 5.41× 10⁻⁶ |
| Example 12 | Li_{2.38}Nb_{0.17}Ti_{0.17}Al_{0.69}F₆ | 0.167 | 0.666 | 1.034 | Conducted | 6.06×10⁻⁶ |
| Example 13 | Li_{2.61}Nb_{0.13}Ti_{0.13}Al_{0.75}F₆ | 0.125 | 0.750 | 1.004 | Conducted | 8.44×10⁻⁶ |
| Example 14 | Li_{2.59}Nb_{0.1}Ti_{0.1}Al_{0.83}F₆ | 0.100 | 0.800 | 1.034 | Conducted | 6.73×10⁻⁶ |
| Comparative Example 1 | LiNbF₆ | - | - | - | Not conducted | 6.55×10⁻⁸ |
| Comparative Example 2 | Li₃NbF₈ | - | - | - | Not conducted | 3.03×10⁻¹¹ |

### <<Discussion>>

The solid electrolyte materials of Examples 1 to 14 had high ionic conductivities of 3.95 × 10⁻⁶ S/cm or higher at room temperature. The solid electrolyte materials of Examples 5 to 10 and 13 especially had high ion conductivities of 7.65 × 10⁻⁶ S/cm or higher at room temperature. In contrast, the solid electrolyte materials of Comparative Examples 1 and 2 had ionic conductivities of less than 1 × 10⁻⁷ S/cm.

As is evident from the comparison of Examples 5 to 10 and Example 13 with Examples 2 to 4, 11, 12, and 14, a solid electrolyte material satisfying especially 0.923 ≤ b1 ≤ 1.004 tends to have an enhanced ionic conductivity.

Using, instead of Al, at least one selected from the group consisting of Be, Mg, Ca, Sr, Ba, Sc, Y, Al, Ga, In, Zr, and Sn also promises the same effects as those in using Al. This is because an element having a formal valence of 2 or more and 4 or less and having a high ionicity has properties similar to those of Al.

As demonstrated by the above examples, according to the present disclosure, it is possible to provide a novel halide solid electrolyte material having a high oxidation resistance and a high ionic conductivity.

### INDUSTRIAL APPLICABILITY

The solid electrolyte material of the present disclosure can be used, for example, in all-solid-state lithium-ion secondary batteries.

## Claims

1. A solid electrolyte material comprising Li, Nb, Ti, M, and F, wherein
the M is at least one selected from the group consisting of Be, Mg, Ca, Sr, Ba, Sc, Y, Al, Ga, In, Zr, and Sn.

2. The solid electrolyte material according to claim 1, represented by the following composition formula (2):
Li_{6-(5-x1-2y1)b1}(Nb_{1-x1-y1}Tiₓ₁M_{y1})_{b1}F₆ Formula (2)
where 0 < x1 < 1, 0 < y1 < 1, 0 < x1 + y1 < 1, and 0 < b1 ≤ 2 are satisfied.

3. The solid electrolyte material according to claim 2, wherein
in the composition formula (2), 0.75 ≤ b1 ≤ 1.1 is satisfied.

4. The solid electrolyte material according to claim 3, wherein
in the composition formula (2), 0.923 ≤ b1 ≤ 1.004 is satisfied.

5. The solid electrolyte material according to any one of claims 2 to 4, wherein
in the composition formula (2), 0.45 ≤ y1 ≤ 0.85 is satisfied.

6. The solid electrolyte material according to claim 5, wherein
in the composition formula (2), 0.666 ≤ y1 ≤ 0.8 is satisfied.

7. The solid electrolyte material according to any one of claims 2 to 6, wherein
in the composition formula (2), 0.05 ≤ x1 ≤ 0.3 is satisfied.

8. The solid electrolyte material according to claim 7, wherein
in the composition formula (2), 0.1 ≤ x1 ≤ 0.167 is satisfied.

9. The solid electrolyte material according to any one of claims 1 to 8, wherein the M is Al.

10. The solid electrolyte material according to claim 1, represented by the following composition formula (3):
Li_{6-(5-x2-3y2)b2}(Nb_{1-x2-y2}Tiₓ₂M_{y2})_{b2}F₆ Formula (3)
where 0 < x2 < 1, 0 < y2 < 1, 0 < x2 + y2 < 1, and 0 < b2 ≤ 2 are satisfied.

11. The solid electrolyte material according to claim 1, represented by the following composition formula (4):
Li_{6-(5-x3-y3)b3}(Nb_{1-x3-y3}Tiₓ₃M_{y3})_{b3}F₆ Formula (4)
where 0 < x3 < 1, 0 < y3 < 1, 0 < x3 + y3 < 1, and 0 < b3 ≤ 2 are satisfied.

12. A battery comprising:
a positive electrode;
a negative electrode; and
an electrolyte layer positioned between the positive electrode and the negative electrode, wherein
at least one selected from the group consisting of the positive electrode, the negative electrode, and the electrolyte layer includes the solid electrolyte material according to any one of claims 1 to 11.
